(19) Europäisches Patentamt
European Patent Office
Office européen des brevets

(11) EP 2 599 817 B1

(12) **FASCICULE DE BREVET EUROPEEN**

(45) Date de publication et mention de la délivrance du brevet:
**03.02.2016 Bulletin 2016/05**

(51) Int Cl.:
***C08K 5/00*** *(2006.01)* ***C09K 3/10*** *(2006.01)*

(21) Numéro de dépôt: **12194673.5**

(22) Date de dépôt: **28.11.2012**

(54) **COMPOSITION LIQUIDE D'ÉTANCHÉITÉ RÉTICULABLE À LA DEMANDE, SON PROCÉDÉ DE PRÉPARATION ET SES APPLICATIONS**

FLÜSSIGE ON DEMAND VERNETZBARE DICHTUNGSZUSAMMENSETZUNG, VERFAHREN DAFÜR UND IHREN VERWENDUNGEN

ON DEMAND CROSSLINKABLE LIQUID SEALING COMPOSITION, PROCESS THEREFOR AND ITS APPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2011 FR 1160969**

(43) Date de publication de la demande:
**05.06.2013 Bulletin 2013/23**

(73) Titulaire: **HUTCHINSON**
**75008 Paris (FR)**

(72) Inventeurs:
- **Laborbe, Elise**
**45490 Courtempierre (FR)**
- **Le Rossignol, Benoit**
**45800 St Jean de Braye (FR)**
- **Boutevin, Bernard**
**34090 Montpellier (FR)**
- **Auvergne, Rémi**
**34680 Saint Georges d'Orques (FR)**
- **Froidevaux, Vincent**
**34090 Montpellier (FR)**

(74) Mandataire: **Dias, Sonia et al**
**Cabinet Orès**
**36 rue de St Pétersbourg**
**75008 Paris (FR)**

(56) Documents cités:
**US-A- 3 247 138 US-A- 3 736 301**
**US-A- 5 411 776**

- **ALBERT SÁNCHEZ ET AL: "Maleimide-Dimethylfuran exo Adducts: Effective Maleimide Protection in the Synthesis of Oligonucleotide Conjugates", ORGANIC LETTERS, vol. 13, no. 16, 19 août 2011 (2011-08-19) , pages 4364-4367, XP055032131, ISSN: 1523-7060, DOI: 10.1021/ol201690b**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 599 817 B1

## Description

L'invention a pour objet une nouvelle composition liquide d'étanchéité à base de polysulfure capable de réticuler à la demande et son procédé de préparation. La présente invention concerne également un procédé de revêtement d'un substrat avec une composition selon l'invention. Les matériaux d'étanchéité durcis formés à partir de cette composition font également parties de l'invention. Enfin, l'invention concerne aussi l'utilisation d'une composition liquide d'étanchéité selon l'invention pour la construction et/ou l'entretien, et plus particulièrement pour le collage et/ou la protection de véhicules et de machines.

Les compositions polysulfures sous forme liquide et durcissable sont utilisées depuis longtemps dans le domaine de l'étanchéité, du fait de la durabilité et de l'imperméabilité de ces polymères (ALIPS - Aliphatic Polysulfides - Monograph of an elastomer - Heinz LUCKE, Hüthig & Wepf, 1994).

Ces matériaux d'étanchéité, couramment appelés « mastics », sont utilisés notamment pour l'isolation, le collage ou la protection contre la corrosion des matériaux de construction utilisés dans les domaines du bâtiment, des transports ou de l'aéronautique. Il s'agit généralement de systèmes bi-composants constitués d'une base (ou matrice) et d'un durcisseur (ou agent de réticulation). C'est au cours d'une étape de mélange que ces deux composants réagissent ensemble et réticulent pour former le mastic final.

EP 0 619 355 décrit un système polysulfure réticulé par des (méth)acrylates, utilisant un dérivé guanidine comme catalyseur. La réaction engagée est très rapide (temps de gel très court), ce qui laisse peu de temps pour la mise en oeuvre du mastic. Les temps de gel varient de moins d'une minute à 20 minutes sans retardateur, et peuvent être augmentés au maximum jusqu'à 7 heures grâce à l'utilisation d'un retardateur acide. Ces systèmes ne sont donc ni parfaitement contrôlés, ni ajustables à souhait, et la sécurité de mise en oeuvre n'est donc pas « infinie ».

Il existe aujourd'hui deux voies de réticulation des polymères polysulfure (PS) terminés -SH :

- par réaction d'oxydoréduction : ce sont les systèmes polysulfure/oxyde de manganèse (PS/$MnO_2$) qui présentent une cinétique de réticulation (prise de dureté du mastic) plutôt lente, pouvant s'étaler sur plusieurs jours,
- par réaction d'addition : ce sont les systèmes polysulfure/résine époxy (PS/époxy) qui présentent une cinétique de réticulation plutôt rapide, mais dont la réaction est incomplète (non totale) à température ambiante. Ces systèmes ont un taux d'extraction élevé qui conduit à une rigidification du mastic lorsqu'il est porté en température.

Le principal inconvénient de ces mastics est la nécessité d'un compromis entre un temps de gel suffisamment long pour la sécurité de mise en oeuvre lors de l'application, et une cinétique de réticulation qui soit la plus rapide possible pour la prise de dureté du mastic et sa manipulation.

Aussi, le concept des mastics *Sealant Cure On Demand* (SCOD) à déclenchement contrôlé a vu le jour. Ces mastics présentent un temps d'utilisation et d'application aussi long que possible et une cinétique de prise rapide une fois la réticulation déclenchée.

Le Brevet EP 1 478 703 décrit un procédé de revêtement d'un substrat par application d'un matériau d'étanchéité capable de réticuler à la demande. Le matériau mis en oeuvre peut être à base de polysulfure terminé -SH conjointement avec un agent de réticulation tel qu'un acrylate, un isocyanate ou une résine époxy, ledit matériau non encore durci contenant un catalyseur latent qui est formé et/ou libéré sous forme active sous l'action d'une énergie extérieure, tel que le chauffage ou un rayonnement électromagnétique, et par lequel est déclenchée et/ou accélérée la réaction entre le polysulfure et le durcisseur. Cette réaction conduit au durcissement du matériau d'étanchéité. Le catalyseur latent utilisé est une amine encapsulée dans une enveloppe polymère. On observe toutefois que ce système ne permet pas un blocage complet de la réaction entre le polysulfure et l'agent de réticulation. On observe une latence de la réaction, ce qui signifie que la réaction se produit, mais de façon très ralentie. Le catalyseur latent conserve sa fonction première, à savoir qu'il s'agit d'un accélérateur de la réaction ; son rôle n'est pas d'empêcher la réaction entre le polysulfure et le durcisseur. Aussi, et dans la mesure où la réaction entre le polysulfure et l'agent de réticulation n'est pas totalement bloquée, les systèmes SCOD du Brevet EP 1 478 703 sont nécessairement des systèmes « bi-composants ». En outre, l'utilisation d'un catalyseur latent sous forme de capsules présente de nombreux inconvénients, à savoir que :

- les capsules de catalyseur latent peuvent être détruites au cours de l'étape de mélangeage, et conduire à une perte de stabilité précoce du mastic,
- la réaction de réticulation est hétérogène par effet de concentration du catalyseur latent, la dispersion des capsules est plus difficile que dans le cas d'un catalyseur liquide, ce qui conduit à une détérioration des propriétés finales du mastic, et plus particulièrement des propriétés mécaniques et de l'adhésion,
- la stabilité des capsules de catalyseur est limitée dans le temps du fait de phénomènes de diffusion,
- la taille des capsules, même minimisée, n'est pas adaptée à certaines applications comme par exemple l'interposition entre des tôles métalliques, l'épaisseur du mastic devant alors être très fine, de l'ordre de 100 à 200 $\mu m$.

La présente invention vise à surmonter ces inconvénients en mettant au point des compositions liquides d'étanchéité dans lesquelles la réaction entre la matrice et le durcisseur serait bloquée de manière effective en rendant inaccessible la fonction réactive du durcisseur, et ce indépendamment de la présence ou non d'un catalyseur. Ce concept permet la préparation d'un système mastic « mono-composant » stable dans le temps à température ambiante, et par voie de conséquence stable au stockage. Ce système est réticulable à la demande et de façon irréversible et rapide grâce à l'apport d'une énergie extérieure (thermique, photochimique...). De ce fait, la stratégie de blocage de la réticulation selon l'invention, par blocage chimique de la fonction réactive de l'agent de réticulation, conduit à un blocage supérieurement efficace des mastics de l'invention par rapport aux mastics du Brevet EP 1 478 703.

Les compositions liquides d'étanchéité de l'invention permettent également l'utilisation de durcisseurs très réactifs vis-à-vis du polysulfure, sans risque d'altération de la stabilité du système mono-composant.

Après durcissement, les compositions de l'invention conduisent à des mastics réticulés présentant d'excellentes propriétés mécaniques et chimiques :

- une résistance à la rupture en traction d'au moins 1 MPa,
- un allongement à la rupture d'au moins 100%,
- une bonne tenue à basse température (~ -53°C), et
- une bonne résistance chimique au jet fuel.

Pour toutes ces raisons, les compositions de l'invention répondent de manière beaucoup plus satisfaisante au concept SCOD tel qu'il est réellement défini, que les solutions jusque là décrites dans l'art antérieur (un schéma de principe d'un système SCOD idéal est représenté à la Figure 1).

Ainsi, l'invention a pour premier objet une composition liquide d'étanchéité comprenant au moins :

(i) un polysulfure à groupe terminal -SH,
(ii) un agent de réticulation choisi parmi les composés éthyléniquement insaturés ou acétyléniquement insaturés, lesdites fonctions éthyléniques insaturées ou acétyléniques insaturées étant bloquées chimiquement par un agent bloquant, par réaction de Diels-Alder,
(iii) éventuellement un catalyseur.

L'agent bloquant sert à protéger la fonction éthylénique insaturée ou acétylénique insaturée de l'agent de réticulation. Il est éliminé ultérieurement sous l'effet d'une énergie extérieure qui provoque la libération de la fonction éthylénique insaturée ou acétylénique insaturée, et qui conduit au déclenchement de la réaction entre le polysulfure et l'agent de réticulation et donc au durcissement de la masse.

Le polysulfure de l'invention possède de préférence une fonctionnalité -SH $\geq 2$. Ledit polysulfure peut présenter une masse moléculaire moyenne comprise entre 1000 et 6500 $g.mol^{-1}$, et de préférence entre 2000 et 3500 $g.mol^{-1}$. Sa viscosité peut être comprise entre 1 et 150 Pa.s, et de préférence entre 10 et 50 Pa.s. La Tg du polysulfure peut être comprise entre -55 et -65°C.

De manière avantageuse, l'agent de réticulation de l'invention présente une fonctionnalité $f \geq 2$, et de préférence $2 \leq f \leq 4$. L'agent de réticulation peut être un composé ou un mélange de plusieurs composés porteurs d'une fonction allylique, une fonction maléimide, ou une fonction éthyléniquement insaturée ou acétyléniquement insaturée porteuse d'un groupe électro-attracteur en alpha de cette double ou de cette triple liaison, ladite fonction pouvant être une fonction aldéhyde, cétone, ester, hémi-ester, amide, hémi-amide, ester-amide, nitrile ou imide $\alpha,\beta$-éthyléniquement insaturée. Les agents de réticulation les plus préférés sont les maléimides, les hémi-esters et les ester-amides.

Le ratio stoechiométrique entre la fonction éthylénique du durcisseur et le groupe-SH du polysulfure peut varier de 1 à 1,4.

Selon un mode de réalisation particulièrement avantageux, l'agent de réticulation est un composé ou un mélange de plusieurs composés imides $\alpha,\beta$-éthyléniquement insaturés choisis parmi les composés mono-maléimides, bis-maléimides ou tris-maléimides de formules :

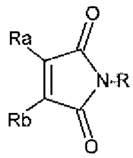

ou

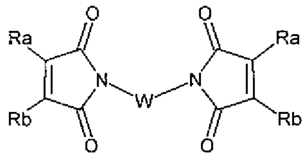

dans lesquelles :

- R est choisi parmi les chaînes alkyles linéaires ou ramifiées en $C_1$-$C_{30}$,
- $R_a$, $R_b$, $R_c$, $R_d$, $R_e$ et $R_f$, identiques ou différents, sont choisis parmi H ou les chaînes alkyles linéaires ou ramifiées en $C_1$-$C_{30}$, et
- W est un motif polyéther, polythioéther, polyester, polyamide, ou polysulfure.

Par définition, un polysulfure est un polymère comprenant au moins une liaison S-S dans sa chaîne.

Le motif W peut être une chaîne alkyle en $C_1$-$C_{30}$ comprenant un ou plusieurs hétéroatomes choisis parmi O, S ou N.

Dans le cas où W est un motif polyéther, il s'agit de préférence d'un motif polyéthylène glycol (PEG), d'un motif polypropylène glycol (PPG), ou d'un motif mixte PEG/PPG. L'agent de réticulation est alors préférablement choisi parmi les composés de formules :

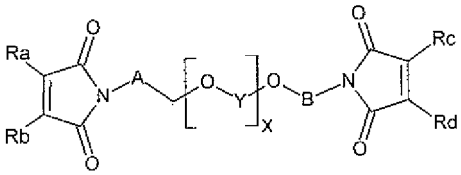

ou

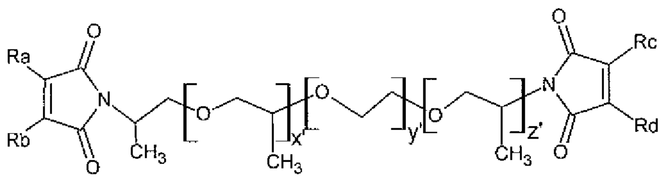

ou

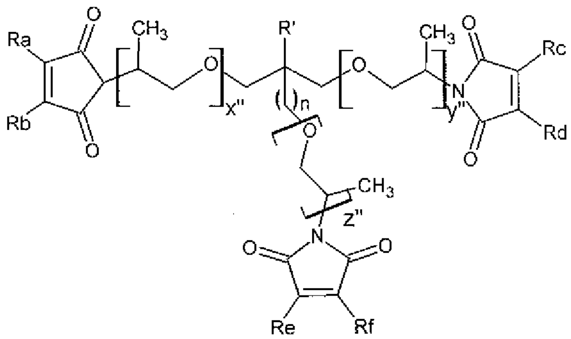

dans lesquelles :

- $R_a$, $R_b$, $R_c$, $R_d$, $R_e$ et $R_f$, identiques ou différents, sont choisis parmi H ou les chaînes alkyles linéaires ou ramifiées en $C_1$-$C_{30}$,
- A et B, identiques ou différentes, sont des chaînes alkyles linéaires ou ramifiées en $C_1$-$C_{30}$, pouvant comprendre dans leur chaîne un ou plusieurs hétéroatomes choisis parmi O, S ou N,
- Y est choisi parmi $-CH_2-$, $-CH_2-CH_2-$, $-CH_2-CH_2-CH_2-$, $-CH_2-CH(CH_3)-$, et $-CH_2-CH_2-CH_2-CH_2$,
- x, x', x", y, y', y", z, z" et z", identiques ou différents, varient de 0 à 70, de préférence de 1 à 40, et encore plus

préférentiellement de 1 à 12,

- les sommes x + y + z, x' + y' + z' et x" + y" + z" sont strictement supérieures à 1, et de préférence comprises entre 1 et 15,
- n varie de 0 et 6, et de préférence n = 0 ou 1,
- R' est H ou un radical alkyle en $C_1$-$C_6$, et de préférence R' est H, $CH_3$ ou $C_2H_5$,

et dans laquelle la liaison éthylénique du cycle mono-maléimide ou les liaisons éthyléniques des cycles bis-maléimides ou tris-maléimides sont bloquées par réaction de Diels-Alder avec ledit agent bloquant.

Dans le cas où W est un motif polythioéther ou polysulfure, ce dernier peut être une chaîne alkyle en $C_1$-$C_{30}$ comprenant un ou plusieurs hétéroatomes O ou un ou plusieurs hétéroatomes S. Il s'agit de préférence d'un motif de formule :

- $-CH_2-CH_2-CH_2-S-CH_2-CH_2-0-CH_2-CH_2-S-CH_2-CH_2-CH_2-$, ou
- $-CH_2-CH_2-CH_2-S-[CH_2-CH_2-O-CH_2-O-CH_2-CH_2-S-S]_{n'}-CH_2-CH_2-O-CH_2-O-CH_2-CH_2-S-CH_2-CH_2-CH_2-$, dans laquelle n' varie de 0 à 7.

L'agent bloquant peut être un diène comprenant au moins un noyau pentacyclique, et de préférence un diène répondant à la formule suivante :

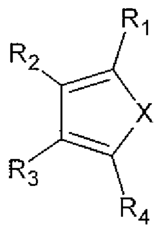

dans laquelle :

- $R_1$, $R_2$, $R_3$ et $R_4$, identiques ou différents, sont choisis parmi H ou les chaînes alkyles en $C_1$-$C_{12}$ éventuellement fonctionnalisées par au moins une fonction ester, éther, cétone ou amide,
- X = $CH_2$, O, S, ou N-$R_x$ dans lequel $R_x$ est choisi parmi les chaînes alkyles linéaires ou ramifiées en $C_1$-$C_{30}$.

Selon un mode de réalisation avantageux, X = O.

Selon un autre mode de réalisation avantageux :

- le radical $R_1$ et éventuellement le radical $R_4$ sont des chaînes alkyles en $C_1$-$C_{12}$ identiques, éventuellement fonctionnalisées par au moins une fonction ester, éther, cétone ou amide, et de préférence choisis parmi les groupements suivants :

$$-R_y-C(O)O-R_z,\ -R_y-(O)CO-R_z,\ \text{et}\ -R_y-O-R_z$$

dans lesquels :

  - Ry est une chaîne alkyle linéaire ou ramifiée en $C_1$-$C_8$, de préférence en $C_1$-$C_4$, et encore plus préférentiellement en $C_1$-$C_2$,
  - $R_z$ est une chaîne alkyle linéaire, ramifiée ou cyclique en $C_1$-$C_{12}$, de préférence en $C_1$-$C_6$, et encore plus préférentiellement une chaîne alkyle linéaire en $C_1$-$C_2$, ou un groupement aryle, et de préférence un groupement phényle,

- les radicaux $R_2$, $R_3$, et éventuellement $R_4$ s'il n'est pas une chaîne alkyle en $C_1$-$C_{12}$ telle que mentionné ci-dessus, sont des atomes d'hydrogène.

Les agents bloquants les plus préférés sont choisis parmi :

- le furfuryl acétate de formule :

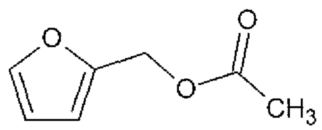

- le furfuryl benzyle de formule :

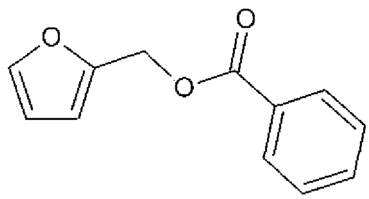

- l'éthyl 3-(2-furyl)propanoate de formule :

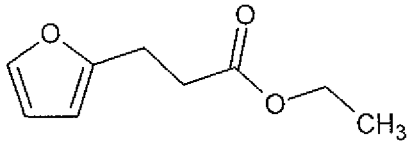

- le furan-2-ylméthyl pivalate de formule :

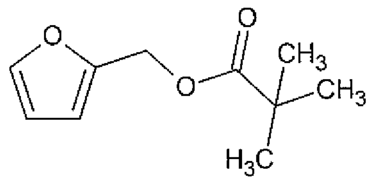

- le furan-2-ylméthyl-3,5,5-triméthylhexanoate de formule :

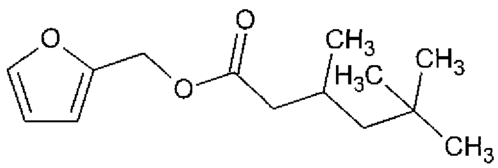

- le furan-2-ylméthylcyclohexanecarboxylate de formule :

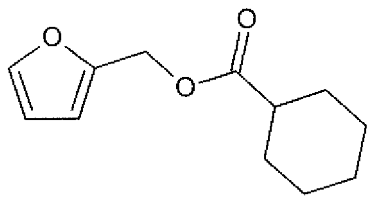

Le catalyseur utilisé est de préférence choisi parmi :

- les amines tertiaires telles que le 1,4-diazabicyclo[2,2,2]octane (DABCO ou TEDA), le 1,8-diazabicyclo[5,4,0]undéc-7-ène (DBU), le 1,5-diazabicyclo[4,3,0]non-5-ène (DBN), le N,N,N',N",N"-pentaméthyldiéthylènetriamine (PMDETA), le N-méthyl-N'-(diméthylaminoéthyl)pipérazine, le N,N-diméthylcyclohexylamine (DMCHA), le N,N',N"-tris(diméthylaminopropyl)-hexahydrotriazine, ou le bis(2-(diméthylamino)éthyl)éther (BDMAEE),

- la guanidine et ses dérivés, tels que la diphényl-guanidine, la tétraméthyl-guanidine, ou la di-o-tolyl-guanidine,
- la morpholine et ses dérivés, tels que la N-méthyl-morpholine (NMM), la N-éthyl-morpholine (NEM), la dimorpholinodiéthyléther (DMDEE), ou l'oxyde de N-méthylmorpholine (NMMO),
- les acides de Lewis, tels que $FeCl_3$, $AlCl_3$, $SnCl_2$, et
- les sels d'étain tels que le dibutyl dilaurate d'étain (DBTL), ou le dioctyl dilaurate d'étain (DOTL).

Les catalyseurs les plus préférés sont les amines tertiaires, et plus particulièrement le I,4-diazabicyclo[2,2,2] octane (DABCO ou TEDA) et le 1,8-diazabicyclo[5,4,0]undéc-7-ène (DBU).

La quantité de catalyseur utilisée varie de 0 à 10 parts en poids pour 100 parts de polymère polysulfure, et de préférence de 0,5 à 5 parts.

Un autre objet de l'invention concerne un procédé de préparation d'une composition liquide d'étanchéité selon l'invention, à savoir un mastic mono-composant « prêt-à-emploi », comprenant au moins les étapes suivantes :

i) la synthèse de l'agent de réticulation telle que défini selon l'invention, bloqué chimiquement par réaction de Diels-Alder avec un agent bloquant tel que défini précédemment, éventuellement en présence d'un catalyseur, puis
ii) le mélangeage de l'agent de réticulation bloqué chimiquement obtenu à l'issu de l'étape i) avec un polymère polysulfure liquide à groupe terminal-SH, éventuellement en présence d'un catalyseur, la température de mélangeage devant être contrôlée pour ne pas dépasser la température de déblocage de l'agent de réticulation (refroidissement éventuellement nécessaire), cette température devant être inférieure à 65°C, et de préférence comprise entre 20 et 40°C.

L'étape ii) de mélangeage peut se faire par voie mécanique à l'aide d'un mélangeur, comme par exemple un mélangeur à pâle (papillon ou crantée) type Dispermat®, ou un mélangeur planétaire (mélangeur comprenant une pâle et un ou plusieurs disperseurs).

La composition liquide d'étanchéité ou mastic « prêt-à-emploi » ainsi préparée est ensuite conditionnée en pot ou en cartouche.

L'invention concerne également un procédé de revêtement pour attacher ou coller des pièces et/ou des garnitures d'étanchéité ou remplir des espaces creux ou des vides intermédiaires, ledit procédé comprenant une étape d'application d'une composition liquide d'étanchéité selon l'invention sur un substrat (en aluminium, en acier, en verre, en composites...), suivie d'une étape de dé-protection de l'agent de réticulation bloqué chimiquement par un agent bloquant sous l'effet d'une énergie extérieure, ce qui conduit au déclenchement de la réaction entre le polysulfure et l'agent de réticulation, et donc au durcissement de la masse du matériau d'étanchéité.

L'énergie extérieure nécessaire au déblocage de l'agent de réticulation peut être une énergie thermique apportée :

- soit par conduction : chauffage par contact direct, par effet joule via une résistance électrique, ou par induction,
- soit par convection : apport d'air chaud, par exemple à l'aide d'un pistolet à air chauffant de type Leister®,
- soit par rayonnement : par lampe infrarouge, par impulsions hautes fréquences telles que les micro-ondes, les ultra hautes fréquences (UFH), ou les ultra-sons,

Selon un mode de réalisation avantageux, l'agent de réticulation bloqué chimiquement par un agent bloquant est déprotégé par chauffage à une température située dans l'intervalle allant de 60 à 120°C, et de préférence de 70 à 100°C. De préférence, l'agent de réticulation bloqué chimiquement par un agent bloquant est soumis à l'action de la chaleur pendant une durée allant de 15 minutes à 2 heures.

Le procédé de revêtement de l'invention peut également comprendre, après l'étape de dé-protection de l'agent de réticulation, une étape de durcissement de la masse du matériau d'étanchéité. Cette étape de durcissement est de préférence réalisée à une température allant de 18 à 35°C, pendant une durée allant de 1 à 3 jours.

Un autre objet de l'invention concerne un matériau d'étanchéité durci qui résulte du durcissement d'une composition liquide d'étanchéité selon l'invention, et qui présente, après durcissement complet, une résistance à la rupture en traction selon la norme ISO 37 d'au moins 1 MPa, un allongement à la rupture en traction selon la norme ISO 37 d'au moins 100%, et une dureté selon la norme ISO 7619 d'au moins 40 shA.

Enfin, un dernier objet de la présente invention concerne l'utilisation d'une composition liquide d'étanchéité selon l'invention pour la construction et/ou l'entretien de véhicules aériens ou spatiaux, d'automobiles, de véhicules sur rails, de navires, de machines, d'appareils et de meubles, et plus particulièrement pour le collage et/ou la protection contre la corrosion de véhicules aériens ou spatiaux, d'automobiles, de véhicules sur rails, de navires, de machines, d'appareils et de meubles.

Outre les dispositions qui précèdent, l'invention comprend encore d'autres dispositions qui ressortiront du complément de description qui suit, qui se rapporte à des exemples mettant en évidence les propriétés avantageuses

des compositions de l'invention, ainsi qu'à la Figure 1 annexée qui représente un schéma de principe d'un système SCOD idéal.

**PARTIE EXPERIMENTALE :**

**<u>Exemple 1</u> :**

Cet exemple étudie la préparation d'un agent de réticulation dont la fonction maléimide est bloquée par réaction de Diels-Alder (DA), ainsi que les conditions de déblocage, et plus précisément la température de la réaction de rétro Diels-Alder (r-DA).

L'étude du blocage et déblocage chimique de la fonction maléimide est réalisée sur un composé modèle bifonctionnel, avec plusieurs agents bloquants, à savoir des dérivés furane de natures différentes. La détermination des températures des réactions de DA et r-DA est mesurée grâce à un suivi RMN du maléimide bloqué, par augmentation progressive de la température.

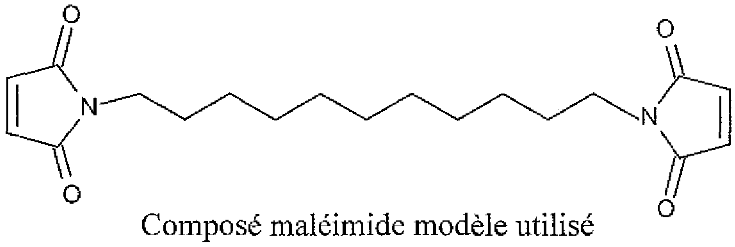

Composé maléimide modèle utilisé

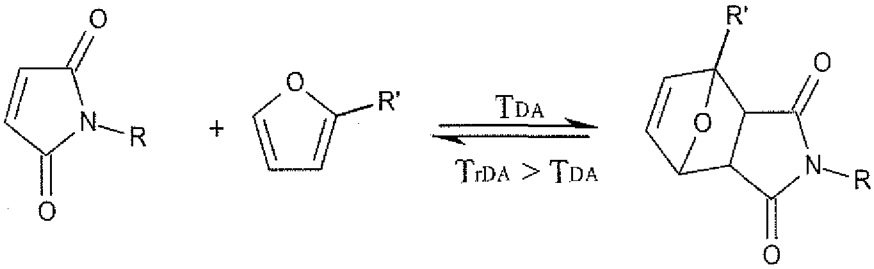


Blocage chimique de la fonction maléimide avec des dérivés du furane :
réaction thermo-reversible (Diels-Alder /rétro-DA)

**Tableau 1 :**

| | Température de DA/rDA (°C) | | | |
|---|---|---|---|---|
| | Diastéréoisomère 1 | | Diastéréoisomère 2 | |
| | DA | rDA | DA | rDA |
| 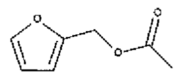 | 40 | 75 | 40 | 95 |
| 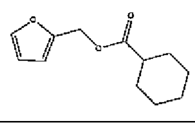 | 40 | 65 | 40 | 95 |
| 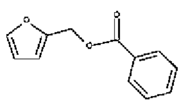 | 40 | 75 | 40 | 95 |
| 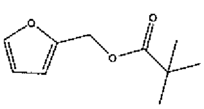 | 40 | 75 | 40 | 95 |

(suite)

| | Température de DA/rDA (°C) | | | |
|---|---|---|---|---|
| | Diastéréoisomère 1 | | Diastéréoisomère 2 | |
| | DA | rDA | DA | rDA |
| 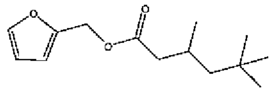 | 40 | 65 | 40 | 95 |
| 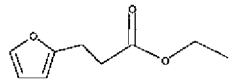 | 40 | 75 | 40 | 95 |

De façon étonnante, les dérivés du furane permettent le blocage de la fonction maléimide à « basse température », les températures de DA étant de 40°C (ces températures pouvant être ramenées à température ambiante en augmentant la durée de réaction de 4 heures à 4 jours). De même, les températures de r-DA se situent entre 65 et 95°C, permettant ainsi d'envisager un déblocage à «température modérée », et par conséquent compatible avec l'application finale visée et l'activation thermique envisagée.

**Exemple 2 :**

Cet exemple étudie la préparation d'un mastic polysulfure par réticulation d'un polymère de polysulfure (PS) liquide avec un bismaléimide. Deux bismaléimides liquides ayant un squelette type PPG sont testés en parallèle : l'un synthétisé à partir de PPG 230 (Jeffamine D230, Huntsman) et l'autre à partir de PPG 400 (Jeffamine D400, Huntsman). La réactivité de ces systèmes est étudiée comparativement sur les bismaléimides à l'état bloqué et non bloqué. Dans le cas du bismaléimide bloqué, le déblocage de l'agent de réticulation bismaléimide, et donc l'activation de la réticulation, se fait par chauffage en étuve.

Au préalable, les agents de réticulation bismaléimides bloqués sont préparés.

Dans un premier temps, les bismaléimides liquides sont synthétisés, puis purifiés et caractérisés par RMN.

Dans un second temps, ces bismaléimides sont bloqués par réaction de Diels-Alder, via un agent bloquant dérivé du furane, le furfuryl acétate. Un contrôle par RMN permet la vérification du blocage effectif des doubles liaisons des bismaléïmides.

Les modes opératoires mis en oeuvre sont détaillés ci-après.

Mode opératoire des synthèses des bismaléimides à base de diamines PPG :

L'anhydride maléique (2,1 éq) est solubilisé dans du THF (2 mL/g d'anhydride), dans un ballon tricol. A l'aide d'une ampoule de coulée, la diamine (1 éq) solubilisée dans du tétrahydrofurane (THF) (2 mL/g de diamine) est ajoutée au goutte à goutte. Le mélange est laissé à réagir pendant 2 heures à température ambiante.

Le montage est ensuite mis sous azote pendant une durée de 10 minutes, puis du $ZnBr_2$ (2,3 éq) est ajouté sous flux d'azote. Une fois le solide totalement solubilisé, le mélange est chauffé à 40°C, puis une solution de bis(triméthylsilyl)amine (HMDS) solubilisé dans du THF (1 mL/mL de HMDS) est ajoutée au goutte à goutte grâce à une ampoule de coulée. Le mélange est chauffé à 70°C pendant une durée de 3 heures. Un liquide marron visqueux est obtenu.

Le liquide visqueux est ensuite extrait via une extraction liquide/liquide avec de l'eau et du chloroforme (ratio 1/3). L'opération est réalisée trois fois, ceci afin d'éliminer toute trace d'eau due à la cyclisation ($2^{ème}$ étape). Après avoir séché la phase organique avec du $Na_2SO_4$ anhydre, le solvant est évaporé. Enfin, le produit obtenu est solubilisé dans du toluène (3 mL/g de produit), puis chauffé à 100°C pendant une nuit, afin d'obtenir exclusivement le maléimide.

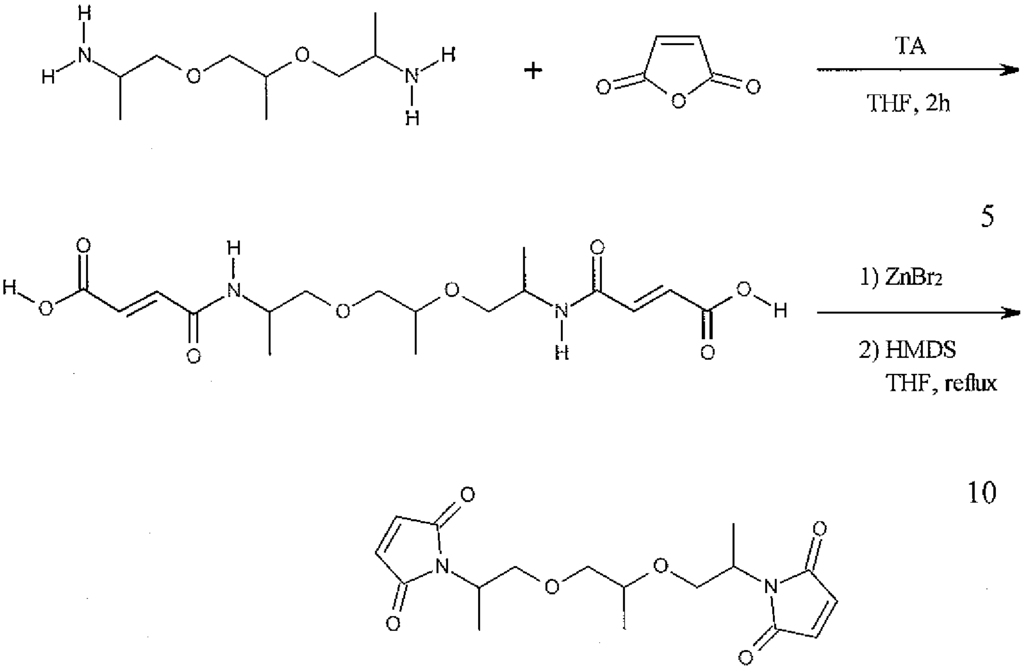


Blocage des maléimides par réaction de Diels-Alder :

Dans un ballon monocol, on introduit le bismaléimide à bloquer. Du solvant (THF ou DCM 1 mL/g de produit) peut être ajouté si le produit est trop visqueux. Une fois le produit dissout, l'agent bloquant est ajouté en quantité stoechiométrique, puis le mélange est laissé à réagir 3 à 4 jours à température ambiante, ou 4 heures à 40°C. Deux diastéréoisomères sont obtenus (endo et exo), mis en évidence par contrôle RMN.

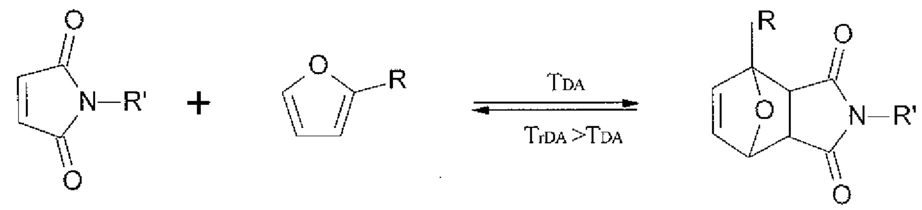


Le bismaléimide PPG 230 bloqué furfuryl acétate est analysé par RMN :

$\delta_H$ (400 MHz, $CDCl_3$) : 6,61-6,51 (d, 2H, H-8'), 6,43-6,31 (m, 2H, H-8), 5,3 (d, 1H, H-7exo) et 5,25 (d, 1H, H-7endo), 4,87-4,57 (dd, 2H, H-9exo) et 4,97-4,37 (dd, 2H, H-9endo), 4,46-4,26 (s, 2H, H-1), 3,96- 3,17 (m, 10H, H-3, H-5, H-4), 2,99-2,82 (dm, 2H, H-6'exo/endo, H-6exo/endo), 2,14 (s, 3H, H-10exo) et 2,11 (s, 3H, H-10endo), 1,31-0,97 (m, 12H, H-2 et H-11).

Le bismaléimide PPG 400 bloqué furfuryl acétate est analysé par RMN :

$\delta_H$ (400 MHz, $CDCl_3$) : 6,54-6,52 (d, 2H, H-8'), 6,40-6,33 (m, 2H, H-8), 5,27 (d, 1H, H-7exo) et 5,24 (s, 1H, H-7endo), 4,84-4,55 (dd, 2H, H-9exo) et 4,95-4,36 (dd, 2H, H-9endo), 4,37-4,27 (s, 2H, H-1), 3,91- 3,26 (m, 20H, H-3, H-5, H-4), 2,92-2,79 (dm, 2H, H-6'exo/endo, H-6exo/endo), 2,10 (s, 3H, H-10exo) et 2,08 (s, 3H, H-10endo), 1,29-1,01 (m, 22H, H-2 et H-11).

Les compositions liquides d'étanchéité sont ensuite préparées à partir de :

- un polymère polysulfure liquide, le Thioplast® G21 (Akzo Nobel),
- un agent de réticulation, incorporé au PS à l'état non bloqué ou bloqué (par le furfuryl acétate), choisi parmi les 2 bismaléimides précédemment synthétisés de formule suivante :

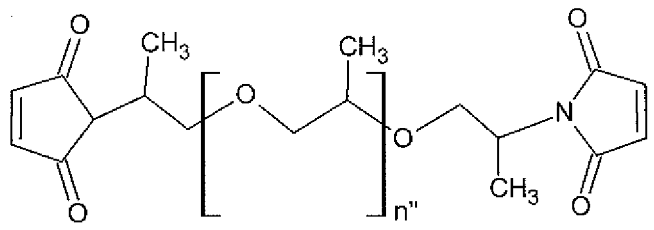

dans laquelle n" = 2 (BM PPG 230) ou n" = 5-6 (BM PPG 400),

- éventuellement un catalyseur : le 1,4-diazabicyclo[2,2,2]octane (DABCO 33-LV®, Air Products).

Les quantités de polysulfure et d'agent de réticulation à mélanger respectent la stoechiométrie de 1,1 entre les fonctions éthyléniques du bismaléïmide et les fonctions thiol du polysulfure. Le catalyseur, s'il est utilisé, est ajouté à hauteur de 3 parts (pour cent parts de polysulfure). L'ensemble des constituants est mélangé manuellement ou mécaniquement à l'aide d'un mélangeur/disperseur à pâle type Dispermat®.

Le temps de gel, qui caractérise le temps de début de prise du mastic (début de formation du réseau tridimensionnel de réticulation), et donc la fin de la période de sécurité de mise en oeuvre du mastic, est déterminé via un test simple de paillasse. Le test est réalisé dans une coupelle en aluminium, sur la base de 20 g de polysulfure. La mesure commence dès que le polysulfure et l'agent de réticulation sont mis en contact (début de l'étape de mélangeage). La montée en viscosité du système est évaluée qualitativement en remuant le mélange à la spatule, jusqu'à atteindre le « temps de gel » ou « temps de fil », c'est-à-dire le moment où le système commence à devenir élastique et se met à « filer » quand on essaie de retirer la spatule.

**Tableau 2 :**

| Agent de réticulation utilisé | Catalyseur | Température (en °C) | Temps de gel |
|---|---|---|---|
| BM /PPG 230 | DABCO | TA | ~ 5 min |
| | - | TA | 2h20 |
| BM /PPG 230 BLQ | DABCO | TA | pas de formation de gel au bout de 11 jours |
| | DABCO | 100°C | 1h15 |
| BM /PPG 400 | DABCO | TA | 8 min |
| BM /PPG 400 BLQ | DABCO | TA | pas de formation de gel au bout de 7 jours |
| | DABCO | 100°C | 1h35 |
| TA = Température ambiante | | | |

Les résultats du Tableau 2 montrent la forte réactivité des bismaléimides sur le polysulfure à température ambiante (temps de gel court, < à 10 min en présence de catalyseur), et la très grande stabilité de ces mêmes systèmes avec les bismaléimides bloqués. On observe ainsi l'efficacité d'un blocage chimique d'un système polysulfure/bismaléimide très réactif, pour obtenir un temps d'application du mastic très long (au moins 7 jours de stabilité). De plus, ces mastics mono-composants dits « prêt-à-l'emploi » sont stables au stockage.

La mise en température de ces systèmes avec les bismaléimides bloqués (à 100°C en étuve) permet bien de déclencher la réaction (temps de gel de 1h15-1h35).

Un composé maléimide bloqué trifonctionnel répondant à la formule suivante a également été préparé :

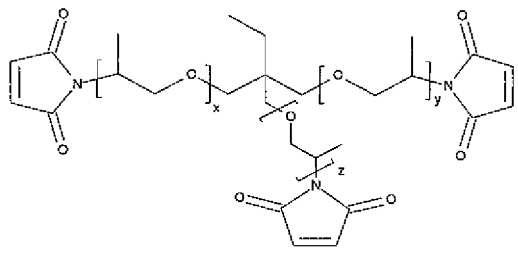

$$x + y + z = 5\text{-}6$$

Mode opératoire de synthèse du composé tris-maléimide :

L'anhydride maléique (3, 1 éq) est solubilisé dans du THF (2 mL/g d'anhydride), dans un ballon tricol. Puis à l'aide d'une ampoule de coulée, la triamine Jeffamine® T-403 de Huntsman (1 éq) solubilisée dans du THF (2 mL/g de diamine) est ajoutée goutte à goutte. Le mélange est laissé à réagir pendant 2 heures à température ambiante.

Le montage est ensuite mis sous azote pendant 10 minutes, puis du $ZnBr_2$ (3,6 éq) est ajouté sous flux d'azote. Une fois le solide totalement solubilisé, le mélange est chauffé à 40°C, puis une solution de HMDS (3,9 éq), solubilisé dans du THF (1 mL/mL de HMDS) est ajoutée goutte à goutte grâce à une ampoule de coulée. Enfin, le mélange est chauffé à 70 °C pendant 3 heures. Un liquide marron visqueux est obtenu.

Le liquide visqueux subit ensuite une extraction liquide/liquide avec de l'eau et du chloroforme (1/3 respectivement), l'opération est répétée trois fois afin d'ôter toute trace d'eau due à la cyclisation ($2^{ème}$ étape). Après avoir séché la phase organique avec du $Na_2SO_4$ anhydre, le solvant est évaporé. Le produit obtenu est ensuite solubilisé dans du toluène (3 mL/g de produit), puis chauffé à 100°C pendant deux jours, afin d'obtenir exclusivement le maléimide.

Le blocage de cet agent de réticulation tris-maléimide est réalisé par réaction de Diels-Alder, selon le même mode opératoire que celui décrit précédemment pour les bismaléimides.

Puis, un mastic a été préparé à partir de :

- un polymère polysulfure liquide, le Thioplast® G21 (Akzo Nobel),
- un agent de réticulation, incorporé au PS, composé d'un mélange du bismaléimide (BM PPG 230) et du tris-maléimide répondant à la formule ci-dessus, tous deux bloqués par le furfuryl acétate, en proportions telles que la fonctionnalité maléimide moyenne soit de 2,6, et
- éventuellement un catalyseur : le 1,4-diazabicyclo[2,2,2]octane (DABCO 33-LV®, Air Products).

Le mastic a ensuite été caractérisé de façon standard, après 14 jours à température ambiante, une fois le déblocage en température réalisé par mise à l'étuve à une température de 100°C pendant une durée de 1h30 :

- Résistance à la rupture (ISO 37) : 1,2 MPa ;
- Allongement à la rupture (ISO 37) : 143% ;
- Dureté (ISO 7619) : 46 shA
- Tg (déterminée par DSC) = - 51 °C
- Adhésion en cisaillement simple (sur éprouvette aluminium, surface encollée 25*25 mm, épaisseur du mastic 200 $\mu$m): 1,2 MPa, faciès de rupture 100% cohésif (rupture dans le matériau).

**Contre-exemple :**

Les compositions évaluées dans le contre-exemple sont représentatives de l'état de l'art décrit dans le Brevet EP 1 478 703. Il s'agit de systèmes réactifs PS/résine époxy ou PS/acrylate, avec un catalyseur « latent », à savoir une amine tertiaire encapsulée.

Le système PS/résine époxy est un système Thioplast® G21 (Akzo Nobel)/résine époxy Novolac DEN 431 (Dow Chemical), fonctionnalité 2,8 et EEW (Epoxide Equivalent Weight) = 175 g/mol.

Le système PS/acrylate est un système Thioplast® G21 (Akzo Nobel)/SR 454 (Sartomer) : triacrylate (TMPEOTA, Triacrylate de Triméthylolpropane Ethoxylé).

Le catalyseur amine encapsulé a été préparé sous forme de microparticules à base :

- de silice poreuse,
- d'azxaine tertiaire : Polycat® SA2/LE (Air Products) - DBU retardée, et
- de cire végétale (point de fusion ~ 75°C).

Dans un premier temps, l'amine sous forme liquide est adsorbée sur la silice. Puis, les particules de silice contenant l'amine sont enrobées de cire en lit d'air fluidisé (vaporisation de la cire à l'état fondu).

Les formules correspondant aux systèmes évalués sont données dans le Tableau 3 ci-dessous :

**Tableau 3 :**

| | PS/résine époxy | PS/acrylate |
|---|---|---|
| Thioplast® G 21 | 100 | 100 |
| DEN 431 | x | |
| SR 454 | | x |
| Catalyseur DBU (sous forme encapsulée ou libre), quantité active | 1,5 | 1,5 |
| x : La quantité de résine époxy ou d'acrylate ajoutée au polymère polysulfure est calculée de façon à respecter le ratio stoechiométrique époxy ou acrylate/-SH = 1,1. | | |

Dans les deux cas, les systèmes sont préparés en mélangeant manuellement le polysulfure, l'agent de réticulation (résine époxy ou acrylate), et le catalyseur amine (liquide sous sa forme libre ou bien encapsulé sous sa forme latente). Le mélangeage manuel permet un mélange « doux » des constituants, et évite ainsi tout endommagement des microparticules de catalyseur qui pourrait générer une activation précoce du système réactif.

Les deux systèmes représentatif du Brevet EP 1 478 703 sont comparés à un système selon l'invention : PS/BM PPG 230 (bloqué ou non bloqué) tel que décrit dans l'exemple 2.

Les temps de gel (déterminés à 23°C) de ces différents systèmes sont récapitulés dans le Tableau 4 suivant :

**Tableau 4 :**

| | Composition selon le Brevet EP 1 478 703 | | Composition selon l'invention | |
|---|---|---|---|---|
| | PS /résine époxy | PS /acrylate | PS /maléimide | |
| Catalyseur libre | ~ 11 min | < 1 min | Maléimide non bloqué | ~ 5 min |
| Catalyseur « encapsulé » | 6-7 jours | 24 h | Maléimide bloqué | > 4 mois |
| Sans catalyseur | < 45 jours | 7 jours | | |

Ces résultats montrent la faible stabilité des systèmes avec catalyseur latent (amine encapsulée) en comparaison au système avec blocage chimique de l'invention. La solution avec blocage chimique permet en outre d'améliorer le temps de stockage, et permet de proposer un mastic SCOD réellement mono-composant.

## Revendications

**1.** Composition liquide d'étanchéité **caractérisée en ce qu'**elle comprend au moins :

(i) un polysulfure à groupe terminal -SH,
(ii) un agent de réticulation choisi parmi les composés éthyléniquement insaturés ou acétyléniquement insaturés, lesdites fonctions éthyléniques insaturées ou acétyléniques insaturées de l'agent de réticulation étant bloquées chimiquement par réaction de Diels-Alder par un agent bloquant,
(iii) éventuellement un catalyseur.

**2.** Composition selon la revendication 1 **caractérisée en ce que** ledit agent de réticulation présente une fonctionnalité $f \geq 2$, et de préférence $2 \leq f \leq 4$.

**3.** Composition selon la revendication 1 ou la revendication 2, **caractérisée en ce que** ledit agent de réticulation est un composé ou un mélange de plusieurs composés porteurs d'une fonction allylique, une fonction maléimide, ou une fonction éthyléniquement insaturée ou acétyléniquement insaturée porteuse d'un groupe électro-attracteur en alpha de cette double ou de cette triple liaison, ladite fonction pouvant être une fonction aldéhyde, cétone, ester, hémi-ester, amide, hémi-amide, ester-amide, nitrile ou imide $\alpha,\beta$-éthyléniquement insaturée.

**4.** Composition selon la revendication 3, **caractérisée en ce que** ledit agent de réticulation est un composé ou un mélange de plusieurs composés imides $\alpha,\beta$-éthyléniquement insaturés choisis parmi les composés mono-maléimides, bis-maléimides ou tris-maléimides de formules :

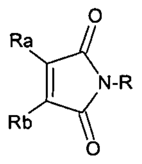

ou

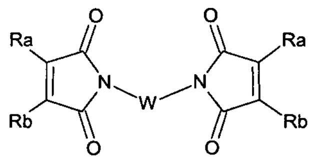

dans lesquelles :

- R est choisi parmi les chaînes alkyles linéaires ou ramifiées en $C_1$-$C_{30}$,
- $R_a$, $R_b$, $R_c$, $R_d$, $R_e$ et $R_f$, identiques ou différents, sont choisis parmi H ou les chaînes alkyles linéaires ou ramifiées en $C_1$-$C_{30}$, et
- W est un motif polyéther, polythioéther, polyester, polyamide, ou polysulfure.

**5.** Composition selon la revendication 4, **caractérisée en ce que** ledit agent de réticulation est un composé mono-maléimide, bis-maléimide ou tris-maléimide dans lequel W est un motif polyéthylène glycol (PEG), polypropylène glycol (PPG), ou un motif mixte PEG/PPG, et choisi parmi les composés de formules :

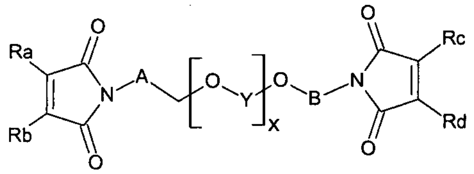

ou

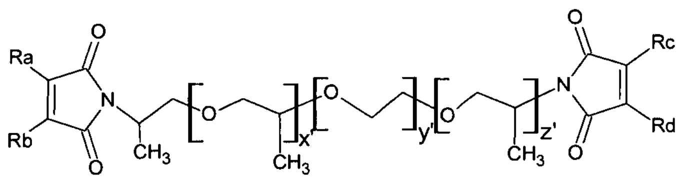

ou

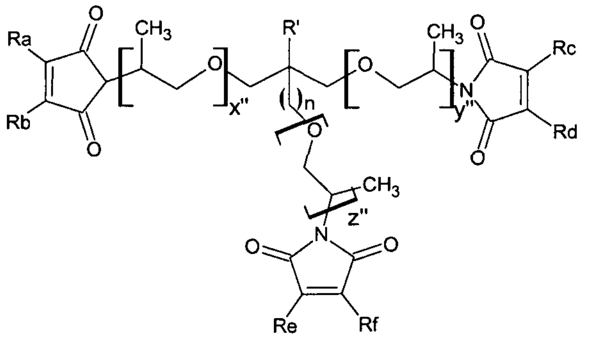

dans lesquelles :

- $R_a$, $R_b$, $R_c$, $R_d$, $R_e$ et $R_f$, identiques ou différents, sont choisis parmi H ou les chaînes alkyles linéaires ou ramifiées en $C_1$-$C_{30}$,
- A et B, identiques ou différentes, sont des chaînes alkyles linéaires ou ramifiées en $C_1$-$C_{30}$, pouvant comprendre dans leur chaîne un ou plusieurs hétéroatomes choisis parmi O, S ou N,
- Y est choisi parmi $-CH_2-$, $-CH_2-CH_2-$, $-CH_2-CH_2-CH_2-$, $-CH_2-CH(CH_3)-$, et $-CH_2-CH_2-CH_2-CH_2$,
- x, x', x", y, y', y", z, z" et z", identiques ou différents, varient de 1 à 70, de préférence de 1 à 40, et encore plus préférentiellement de 1 à 12,
- les sommes x + y + z, x' + y' + z' et x" + y" + z" sont strictement supérieures à 1, et de préférence comprises

entre 1 et 15,
- n varie de 0 à 6, et de préférence n = 0 ou 1,
- R' est H ou un radical alkyle en $C_1$-$C_6$, et de préférence R' est H, $CH_3$ ou $C_2H_5$,

et dans laquelle la liaison éthylénique du cycle mono-maléimide ou les liaisons éthyléniques des cycles bis-maléimides ou tris-maléimides sont bloquées par réaction de Diels-Alder avec ledit agent bloquant.

**6.** Composition selon l'une des revendications 1 à 5, **caractérisée en ce que** ledit agent bloquant est un diène comprenant au moins un noyau pentacyclique.

**7.** Composition selon la revendication 6, **caractérisée en ce que** ledit agent bloquant est un diène répondant à la formule suivante :

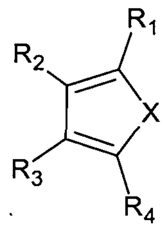

dans laquelle :

- $R_1$, $R_2$, $R_3$ et $R_4$, identiques ou différents, sont choisis parmi H ou les chaînes alkyles en $C_1$-$C_{12}$ éventuellement fonctionnalisées par au moins une fonction ester, éther, cétone ou amide,
- X = $CH_2$, O, S, ou N-$R_x$ dans lequel $R_x$ est choisi parmi les chaînes alkyles linéaires ou ramifiées en $C_1$-$C_{30}$.

**8.** Composition selon la revendication 7, dans laquelle X = O.

**9.** Composition selon la revendication 7 ou la revendication 8, dans laquelle :

- le radical $R_1$ et éventuellement le radical $R_4$ sont des chaînes alkyles en $C_1$-$C_{12}$ identiques, éventuellement fonctionnalisée par au moins une fonction ester, éther, cétone ou amide,
- les radicaux $R_2$, $R_3$, et éventuellement $R_4$ s'il n'est pas une chaîne alkyle en $C_1$-$C_{12}$, sont des atomes d'hydrogène.

**10.** Composition selon la revendication 9, dans laquelle le radical $R_1$ et éventuellement le radical $R_4$ sont choisis parmi les groupements suivants :

$$-R_y\text{-C(O)O-}R_z,\ -R_y\text{-(O)CO-}R_z,\ \text{et } R_y\text{-O-}R_z,$$

dans lesquels :

- Ry est une chaîne alkyle linéaire ou ramifiée en $C_1$-$C_8$, de préférence en $C_1$-$C_4$, et encore plus préférentiellement en $C_1$-$C_2$,
- $R_z$ est une chaîne alkyle linéaire, ramifiée ou cyclique en $C_1$-$C_{12}$, de préférence en $C_1$-$C_6$, et encore plus préférentiellement une chaîne alkyle linéaire en $C_1$-$C_2$, ou un groupement aryle, et de préférence un groupement phényle.

**11.** Composition selon l'une des revendications 1 à 10, **caractérisée en ce que** ledit agent bloquant est choisi parmi : le furfuryl acétate, le furfuryl benzyle, l'éthyl 3-(2-furyl)propanoate, le furan-2-ylméthyl pivalate, le furan-2-ylméthyl-3,5,5-trimethylhexanoate, le furan-2-ylmethylcyclohexanecarboxylate.

**12.** Procédé de préparation d'une composition liquide d'étanchéité telle que définie selon l'une des revendications 1 à 11, **caractérisé en ce qu'**il comprend au moins les étapes suivantes :

i) la synthèse de l'agent de réticulation telle que défini selon l'une des revendications 1 à 11, bloqué chimiquement

par réaction de Diels-Alder avec un agent bloquant tel que défini selon l'une des revendications 1 à 11, éventuellement en présence d'un catalyseur, puis
ii) le mélangeage de l'agent de réticulation bloqué chimiquement obtenu à l'issu de l'étape i) avec un polymère polysulfure liquide à groupe terminal -SH, éventuellement en présence d'un catalyseur, la température de mélangeage devant être contrôlée pour ne pas dépasser la température de déblocage de l'agent de réticulation.

**13.** Procédé de revêtement **caractérisé en ce qu'**il comprend une étape d'application d'une composition telle que définie selon l'une des revendications 1 à 11 sur un substrat, suivie d'une étape de dé-protection de l'agent de réticulation bloqué chimiquement par un agent bloquant sous l'effet d'une énergie extérieure, ce qui conduit au déclenchement de la réaction entre le polysulfure et l'agent de réticulation, et donc au durcissement de la masse du matériau d'étanchéité.

**14.** Procédé selon la revendication 13, dans lequel l'agent de réticulation bloqué chimiquement par un agent bloquant est dé-protégé par rétro Diels-Alder.

**15.** Procédé selon la revendication 13 ou la revendication 14, dans lequel l'énergie extérieure est apportée par conduction, par convection, ou par rayonnement.

**16.** Procédé selon l'une des revendications 13 à 15, dans lequel l'agent de réticulation bloquée chimiquement par un agent bloquant est déprotégé par chauffage à une température située dans l'intervalle allant de 60 à 120°C, et de préférence de 70 à 100°C.

**17.** Procédé selon la revendication 16, dans lequel l'agent de réticulation bloquée chimiquement par un agent bloquant est soumis à l'action de la chaleur pendant une durée allant de 15 minutes à 2 heures.

**18.** Procédé selon l'une des revendications 13 à 17, dans lequel, après l'étape de dé-protection de l'agent de réticulation, la masse de matériau d'étanchéité est soumis à une étape de durcissement.

**19.** Procédé selon la revendication 18, dans lequel l'étape de durcissement est réalisée à une température allant de 18 à 35°C, pendant une durée allant de 1 à 3 jours.

**20.** Matériau d'étanchéité durci **caractérisé en ce qu'**il résulte du durcissement d'une composition liquide d'étanchéité telle que définie selon l'une des revendications 1 à 11, et **en ce qu'**il présente, après durcissement complet, une résistance à la rupture en traction selon la norme ISO 37 d'au moins 1 MPa, un allongement à la rupture en traction selon la norme ISO 37 d'au moins 100%, et une dureté selon la norme ISO 7619 d'au moins 40 shA.

**21.** Utilisation d'une composition liquide d'étanchéité telle que définie selon l'une des revendications 1 à 11 pour la construction et/ou l'entretien de véhicules aériens ou spatiaux, d'automobiles, de véhicules sur rails, de navires, de machines, d'appareils et de meubles.

**22.** Utilisation d'une composition liquide d'étanchéité telle que définie selon la revendication 21 pour le collage et/ou la protection contre la corrosion de véhicules aériens ou spatiaux, d'automobiles, de véhicules sur rails, de navires, de machines, d'appareils et de meubles.

## Patentansprüche

**1.** Flüssige Abdichtzusammensetzung, **dadurch gekennzeichnet, dass** sie wenigstens umfasst:

(i) ein Polysulfid mit Endgruppe-SH,
(ii) einen Vernetzungswirkstoff, der ausgewählt ist aus den ethylenisch ungesättigten oder acetylenisch ungesättigten Verbindungen, wobei die genannten ethylenisch ungesättigten oder acetylenisch ungesättigten Funktionen des Vernetzungsstoffs per Diels-Alder-Reaktion durch einen blockierenden Wirkstoff chemisch blockiert sind,
(iii) eventuell einen Katalysator.

**2.** Zusammensetzung gemäß Anspruch 1, **dadurch gekennzeichnet, dass** der genannte Vernetzungswirkstoff eine Funktionalität $f \geq 2$ und bevorzugt $2 \leq f \leq 4$ aufweist.

3. Zusammensetzung gemäß Anspruch 1 oder Anspruch 2, **dadurch gekennzeichnet, dass** der genannte Vernetzungswirkstoff eine Verbindung oder eine Mischung aus mehreren Verbindungen ist, die eine Allylfunktion, eine Maleimidfunktion oder eine ethylenisch ungesättigte oder acethylenisch ungesättigte Funktion einer elektrisch anziehenden Gruppe im Alpha dieser doppelten oder dieser dreifachen Verbindung ist, wobei die genannte Funktion eine ethylenisch ungesättigte $\alpha$, $\beta$-Aldehyd-, -Ceton-, -Ester-, -Hemi-Ester-, -Amid-, -Hemi-Amid-, - Ester-Amid-, -Nitril- oder -Imid-Funktion sein kann.

4. Zusammensetzung gemäß Anspruch 3, **dadurch gekennzeichnet, dass** der genannte Vernetzungswirkstoff eine Verbindung oder eine Mischung aus mehreren ethylenisch ungesättigten $\alpha$, $\beta$-Imid-Verbindungen ist, die aus den mono-Maleimid-, bis-Maleimid- oder tris-Maleimid-Verbindungen ausgewählt sind mit den Formeln:

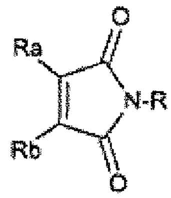

oder

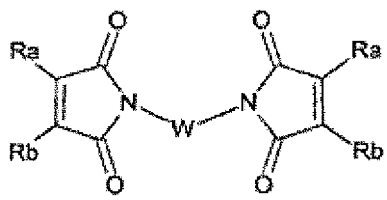

bei denen:

- R ausgewählt ist aus den linearen oder verzweigten Alkylketten in $C_1$-$C_{30}$,
- $R_a$, $R_b$, $R_c$, $R_d$, $R_e$ und $R_f$, identisch oder unterschiedlich, ausgewählt sind aus H oder den linearen oder verzweigten Alkylketten in $C_1$-$C_{30}$ und
- W ein Polyethermotiv, Polythioether, Polyester, Polyamid oder Polysulfid ist.

5. Zusammensetzung gemäß Anspruch 4, **dadurch gekennzeichnet, dass** der genannte Vernetzungswirkstoff eine mono-Maleimid-, bis-Maleimid- oder tris-Maleimidverbindung ist, bei der W ein Polyethylenglykol- (PEG), Polyproplengylkol- (PPG) oder ein gemischtes Motiv PEG/PPG ist und ausgewählt ist aus den Verbindungen der Formeln:

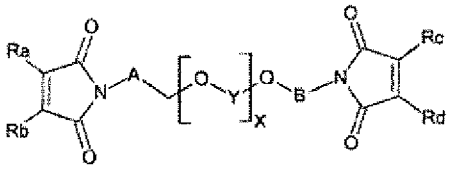

ou

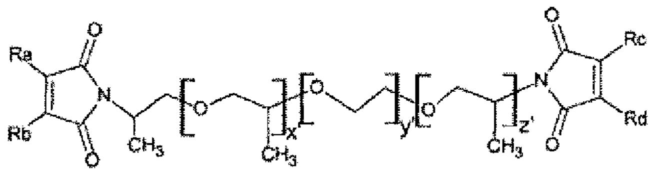

oder

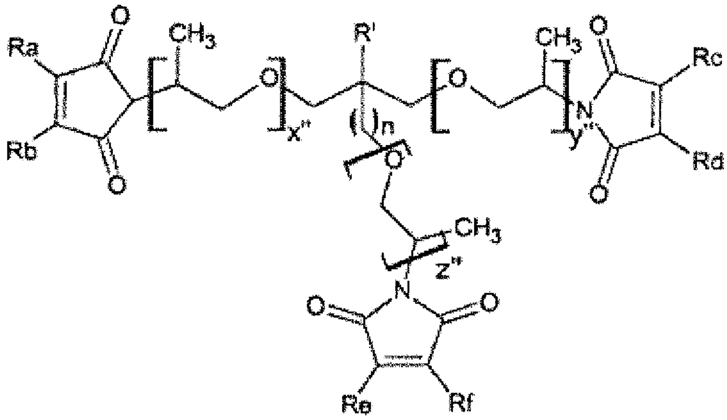

bei denen:

- $R_a$, $R_b$, $R_c$, $R_d$, $R_e$ und $R_f$, identisch oder unterschiedlich, ausgewählt sind aus H oder den linearen oder verzweigten Alkylketten in $C_1$-$C_{30}$
- A und B, identisch oder unterschiedlich, ausgewählt sind aus linearen oder verzweigten Ketten in $C_1$-$C_{30}$, die in ihrer Kette ein oder mehrere Heteroatome umfassen können, die ausgewählt sind aus O, S oder N,
- Y ausgewählt ist aus $-CH_2-$, $-CH_2-CH_2-$, $-CH_2-CH_2-CH_2-$, $-CH_2-CH(CH_3)-$ und $-CH_2-CH_2-CH_2-CH_2-$,
- x, x', x", y, y', y", z, z" und z", identisch oder unterschiedlich, von 1 bis 70 variieren, bevorzugt von 1 bis 40, und noch weiter bevorzugt von 1 bis 12,
- die Summen x + y + z, x' + y' + z' und x" + y" + z" strikt größer sind als 1 und bevorzugt zwischen 1 und 15 inbegriffen sind,
- n von 0 bis 6 variiert und bevorzugt n = 0 oder 1 ist,
- R' H oder ein Alkylradikal in $C_1$-$C_6$ ist und R' bevorzugt H, $CH_3$ oder $C_2H_5$ ist und bei der die Ethylenverbindung des mono-Maleimidzyklus oder die ethylenischen Verbindungen der bis-Maleimid- oder tris-Maleimidzyklen per Diels-Alder-Reaktion mit dem genannten blockierenden Wirkstoff blockiert sind.

6. Zusammensetzung gemäß Anspruch 1 bis 5, **dadurch gekennzeichnet, dass** der genannte blockierende Wirkstoff ein Dien ist, das wenigstens einen pentazyklischen Kern umfasst.

7. Zusammensetzung gemäß Anspruch 6, **dadurch gekennzeichnet, dass** der genannte blockierende Wirkstoff ein Dien ist, das der folgenden Formel entspricht:

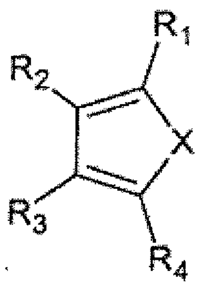

bei der:

- $R_1$, $R_2$, $R_3$ und $R_4$, identisch oder unterschiedlich, ausgewählt sind aus H oder den Alkylketten in $C_1$-$C_{12}$, die eventuell durch wenigstens eine Ester-, Ether-, Ceton- oder Amidfunktion funktionalisiert sind,
- X = $CH_2$, O, S oder N-$R_x$ ist, bei der $R_x$ ausgewählt ist aus den linearen oder verzweigten Alkylketten in $C_1$-$C_{30}$.

**8.** Zusammensetzung gemäß Anspruch 7, bei der X = O.

**9.** Zusammensetzung gemäß Anspruch 7 oder Anspruch 8, bei der:

* das Radikal $R_1$ und eventuell das Radikal $R_4$ identische Alkylketten in $C_1$-$C_{12}$ sind, die eventuell durch wenigstens eine Ester-, Ether-, Ceton- oder Amid-Funktion funktionalisiert sind,
* die Radikale $R_2$, $R_3$ und eventuell $R_4$, wenn es keine Alkylkette in $C_1$-$C_{12}$ ist, Wasserstoffatome sind.

**10.** Zusammensetzung gemäß Anspruch 9, bei der das Radikal $R_1$ und eventuell das Radikal $R_4$ ausgewählt sind aus den folgenden Gruppierungen:

$$-R_y\text{-C(O)O-}R_z,\ -R_y\text{-(O)CO-}R_z \text{ und } R_y\text{-O-}R_z,$$

bei der:

- $R_y$ eine lineare oder verzweigte Alkylkette in $C_1$-$C_8$, bevorzugt in $C_1$-$C_4$ und weiter bevorzugt in $C_1$-$C_2$ ist,
- $R_z$ eine lineare, verzweigte oder zyklische Alkylkette in $C_1$-$C_{12}$, bevorzugt in $C_1$-$C_6$ und noch weiter bevorzugt eine lineare Alkylkette in $C_1$-$C_2$ oder eine Arylgruppierung und bevorzugt eine Phenylgruppierung ist.

**11.** Zusammensetzung gemäß Anspruch 1 bis 10, **dadurch gekennzeichnet, dass** der genannte blockierende Wirkstoff ausgewählt ist aus: dem Furfurylacetat, dem Furfurylbenzyl, dem Ethyl 3-(2-Furyl)Propanoat, dem Furan-2-Ylmethyl-Pivalat, dem Furan-2-Ylmethyl-3, 5, 5-Trimethylhexanoat, dem Furan-2-Ylmethylcyclohexancarboxylat.

**12.** Zubereitungsverfahren einer flüssigen Abdichtzusammensetzung gemäß Definition gemäß Anspruch 1 bis 11, dadurch gekenntzeichnet, dass sie wenigstens die folgenden Stufen umfasst:

i) die Synthese des Retikulationswirkstoffs gemäß Definition nach Anspruch 1 bis 11, der chemisch per Diels-Alder-Reaktion mit einem blockierenden Wirkstoff gemäß Definition nach Anspruch 1 bis 11 blockiert ist, eventuell bei Vorhandensein eines Katalysators, dann
ii) das Vermischen des chemisch blockierten Vernetzungswirkstoffs, der nach der Stufe i) mit einem flüssigen Polysulfidpolymer mit Endgruppe -SH erhalten wurde, eventuell bei Vorhandensein eines Katalysators, wobei die Vemischungstemperatur kontrolliert werden muss, um nicht die Freigabetemperatur des Vernetzungswirkstoffs zu überschreiten..

**13.** Beschichtungsverfahren, **dadurch gekennzeichnet, dass** es eine Anwendungsstufe einer Zusammensetzung gemäß Definition nach Anspruch 1 bis 11 auf einem Substrat umfasst, gefolgt von einer Entschützungsstufe des Vernetzungswirkstoffs, der chemisch durch einen blockierenden Wirkstoff unter der Wirkung einer externen Energie blockiert ist, was zum Auslösen der Reaktion zwischen dem Polysulfid und dem Vernetzungsagenten und damit zum Aushärten der Masse des Abdichtmaterials führt.

**14.** Verfahren gemäß Anspruch 13, bei dem der Vernetzungswirkstoff, der chemisch durch einen blockierenden Wirkstoff blockiert wird, per Retro-Diels-Altler entschützt wird.

**15.** Verfahren gemäß Anspruch 13 oder Anspruch 14, bei dem die externe Energie per Leitung, per Kartvektion oder per Strahlung eingebracht wird.

**16.** Verfahren gemäß Anspruch 13 bis 15, bei dem der Vernetzungswirkstoff, der chemisch durch einen blockierenden Wirkstoff blockiert wird, per Erhitzen auf eine Temperatur entschützt wird, die sich in dem Intervall befindet, das von 60 bis 120° C und bevorzugt von 70 bis 100° C reicht.

**17.** Verfahren gemäß Anspruch 16, bei dem der Vernetzungswirkstoff, der chemisch durch einen blockierenden Wirkstoff blockiert wird, während einer von 15 Minuten bis 2 Stunden reichenden Dauer der Wirkung der Hitze unterzogen wird.

**18.** Verfahren gemäß Anspruch 13 bis 17, bei dem nach der Stufe der Entschützung des Vernetzungswirkstoffs die

Masse des Abdichtmaterials einer Aushärtungsstufe unterzogen wird.

**19.** Verfahren gemäß Anspruch 18, bei dem die Aushärtungsstufe bei einer von 18 bis 35° C reichenden Temperatur über eine von 1 bis 3 Tagen reichende Dauer realisiert wird.

**20.** Ausgehärtetes Abdichtmaterial, **dadurch gekennzeichnet, dass** es aus der Aushärtung einer flüssigen Abdichtzusammensetzung gemäß Definition nach Anspruch 1 bis 11 resultiert und dass es nach dem kompletten Aushärten eine Zugfestigkeit beim Bruch gemäß der Norm ISO 37 von wenigstens 1 MPa, eine Bruchdehnung gemäß der Norm ISO 37 von wenigstens 100 % und eine Härte gemäß der Norm ISO 7619 von wenigstens 40 shA aufweist.

**21.** Verwendung einer flüssigen Abdichtzusammensetzung gemäß Definition nach Anspruch 1 bis 11 für den Bau und / oder die Instandhaltung von Luft- oder Raumfahrzeugen, Automobilen, Schienenfahrzeugen, Schiffen, Maschinen, Geräten und Möbeln.

**22.** Verwendung einer flüssigen Abdichtzusammensetzung gemäß Definition nach Anspruch 21 für das Verkleben und / oder den Schutz vor Korrosion von Luft- oder Raumfahrzeugen, Automobilen, Schienenfahrzeugen, Schiffen, Maschinen, Geräten und Möbeln.

## Claims

**1.** Liquid sealing composition **characterized in that** it contains at least:

(i) one polysulfide with -SH terminal group;
(ii) one reticulation agent chosen from among the ethylenically-unsaturated or acetylenically-unsaturated compounds, with the said ethylenically-unsaturated or acetylenically-unsaturated functions of the reticulation agent being chemically blocked by Diels-Alder reaction by a blocking agent;
(iii) possibly a catalyzer.

**2.** Composition in accordance with claim 1, **characterized in that** the said reticulation agent has an $f \geq 2$ functionality, and preferably a $2 \leq f \leq 4$ functionality.

**3.** Composition in accordance with claim 1 or claim 2, **characterized in that** the said reticulation agent is a compound or mixture of multiple compounds incorporating an allylic function, a maleimido function or an ethylenically-unsaturated or acetylenically-unsaturated function incorporating an alpha electro-attractive group of this dual or triple bonding, the which function may be an aldehyde, cetone, ester, hemi-ester, amide, hemi-amide, ester-amide, nitrile or imide a,β-ethylenically-unsaturated function.

**4.** Composition in accordance with claim 3, **characterized in that** the said reticulation agent is a compound or mixture of multiple imide α,β-ethylenically-unsaturated compounds chosen from the mono-maleimide, bis-maleimide or tris-maleimide compounds with the following formulae:

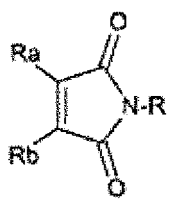

or

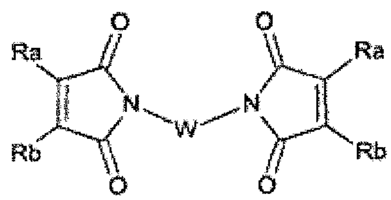

wherein:

- R is chosen from the alkyl chains that are linear or ramified in $C_1$-$C_{30}$;
- $R_a$, $R_b$, $R_c$, $R_d$, $R_e$ and $R_f$, being identical or different, are chosen from H or the alkyl chains that are linear or ramified in $C_1$-$C_{30}$; and
- W is a polyether, polythioether, polyester, polyamide or polysulfide pattern.

**5.** Composition in accordance with claim 4, **characterized in that** the said reticulation agent is a mono-maleimide, bis-maleimide or tris-maleimide compound in which W is a polyethylene glycol (PEG) or polypropylene glycol (PPG) pattern, or a combined PEG/PPG pattern, and is chosen from among the compounds of which the formulae are as follows:

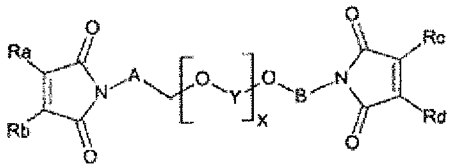

ou

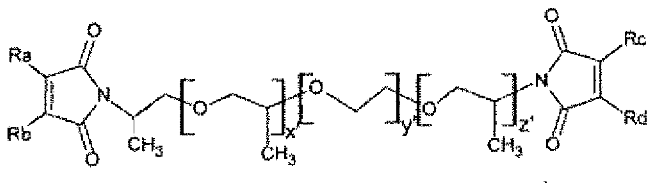

or

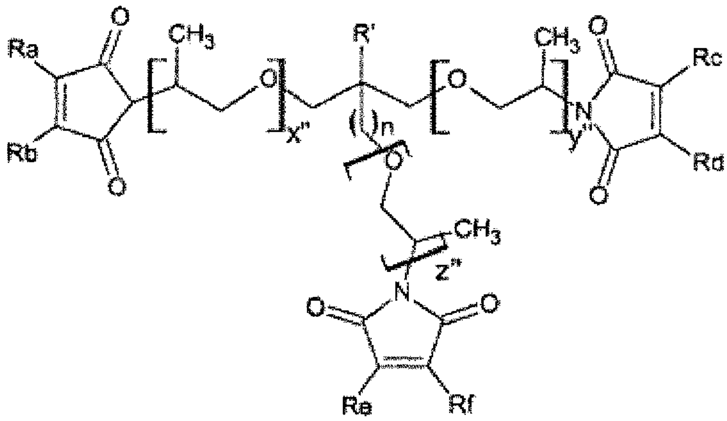

in which:

- $R_a$, $R_b$, $R_c$, $R_d$, $R_e$ and $R_f$, being identical or different, are chosen from H or alkyl chains that are linear or ramified in $C_1$-$C_{30}$;
- A and B, being identical or different, are alkyl chains that are linear or ramified in $C_1$-$C_{30}$, of which the chain possibly includes one or more heteroatoms chosen from among O, S or N;
- Y is chosen from $-CH_2-$, $-CH_2-CH_2-$, $-CH_2-CH_2-CH_2-$, $-CH_2-CH(CH_3)-$ and $-CH_2-CH_2-CH_2-CH_2$;
- x, x', x", y, y', y", z, z" and z", being identical or different, vary from 1 to 70, preferably from 1 to 40, and even more preferably from 1 to 12;
- the sums x + y + z, x' + y' + z' and x" + y" + z" are strictly greater than 1, and preferably between 1 and 15;
- n varies from 0 to 6, and preferably n = 0 or 1;
- R' is H or an alkyl radical in $C_1$-$C_6$, and preferably R' is H, $CH_3$ or $C_2H_5$;

and in which the ethylenic bonding of the mono-maleimide cycle or the ethylenic bondings of the bis-maleimide or tris-maleimide cycles are blocked by Diels-Alder reaction with the said blocking agent.

**6.** Composition according to one of claims 1 to 5, **characterized in that** the said blocking agent is a diene including at least one pentacyclic kernel.

**7.** Composition according to claim 6, **characterized by** the fact that the said blocking agent is a diene of which the formula is as follows:

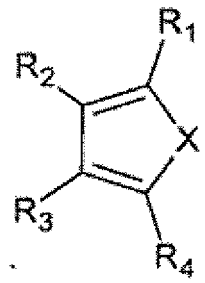

in which:

- R1, R2, R3 and $R_4$, being identical or different, are chosen from among H or the alkyl chains in $C_1$-$C_{12}$, possibly functionalized by at least one ester, ether, cetone or amide function;
- X = $CH_2$, O, S or N-$R_x$, in which $R_x$ is chosen from among the alkyl chains that are linear or ramified in $C_1$-$C_{30}$.

**8.** Composition according to claim 7, wherein X = O.

**9.** Composition according to claim 7 or claim 8, wherein:

- the radical $R_1$ and, where appropriate, the radical $R_4$ are alkyl chains with identical $C_1$-$C_{12}$, possibly functionalized by at least one ester, ether, cetone or amide function;
- the radicals $R_2$, $R_3$ and, where appropriate, $R_4$ (if it not an alkyl chain in $C_1$-$C_{12}$) are hydrogen atoms.

**10.** Composition according to claim 9, wherein the radical $R_1$ and, where appropriate, the radical $R_4$ are chosen from the following groupings:

-$R_y$-C(O)O-$R_z$, -$R_y$-(O)CO-$R_z$, and $R_y$-O-$R_z$,

in which:

- Ry is an alkyl chain that is linear or ramified in $C_1$-$C_8$, preferably in $C_1$-$C_4$, and even more preferably in $C_1$-$C_2$;
- $R_z$ is an alkyl chain that is linear, ramified or cyclical in $C_1$-$C_{12}$, preferably in $C_1$-$C_6$, and even more preferably an alkyl chain that is linear in $C_1$-$C_2$, or an aryl grouping, and preferably a phenyl grouping.

**11.** Composition according to one of claims 1 to 10, **characterized in that** the said blocking agent is chosen from among: furfuryl acetate, furfuryl benzyl, ethyl 3-(2-furyl)propanoate, furan-2-ylmethyl pivalate, furan-2-ylmethyl-3,5,5-trimethylhexanoate, furan-2-ylmethylcyclohexanecarboxylate.

**12.** Process for the preparation of a liquid sealing composition such as defined in one of claims 1 to 11, **characterized in that** it includes at least the following steps:

i) the synthesis of the reticulation agent such as defined in one of claims 1 to 11, chemically blocked by Diels-Alder reaction with a blocking agent such as specified in one of claims 1 to 11, possibly in the presence of a catalyzer, then
ii) the mixing of the chemically-blocked reticulation agent obtained at the end of step i) with a liquid polysulfide polymer with terminal group -SH, possibly in the presence of a catalyzer, with the mixing temperature being controlled so as not to exceed the de-blocking temperature of the reticulation agent.

**13.** Coating process **characterized in that** it includes a stage of application of a composition such as defined in one of claims 1 to 11, onto a substrate, followed by a stage of de-protection of the reticulation agent chemically blocked by a blocking agent under the effect of an external energy, which leads to the triggering of the reaction between the polysulfide and the reticulation agent and, therefore, to the hardening of the mass of the sealing material.

**14.** Process in accordance with claim 13, wherein the reticulation agent chemically blocked by a blocking agent is de-protected by retro-Diels-Alder.

**15.** Process in accordance with claim 13 or claim 14, wherein the external energy is conveyed by conduction, convection or radiation.

**16.** Process in accordance with one of claims 13 to 15, wherein the reticulation agent chemically blocked by a blocking agent is de-protected by heating to a temperature in the range extending from 60 to 120°C and, preferably, 70 to 100°C.

**17.** Process in accordance with claim 16, wherein the reticulation agent chemically blocked by a blocking agent is subjected to the action of the heat for a time interval extending from 15 minutes to 2 hours.

**18.** Process in accordance with one of claims 13 to 17, wherein, after the step of de-protection of the reticulation agent, the mass of the sealing material is subjected to a hardening stage.

**19.** Process according to claim 18, wherein the hardening stage is undertaken at a temperature ranging from 18 to 35°C, for a time interval extending from 1 to 3 days.

**20.** Hardened sealing material **characterized in that** it results from the hardening of a liquid sealing composition such as defined in one of claims 1 to 11, and **in that** it has-after complete hardening-a breaking strength under traction in accordance with standard ISO 37 of at least 1 MPa, an extension on breaking under traction in accordance with standard ISO 37 of at least 100%, and a hardness in conformity with standard ISO 7619 of at least 40 shA.

**21.** Use of a liquid sealing composition, such as defined in one of claims 1 to 11, for the construction and/or maintenance of aircraft, spacecraft, automotive road vehicles, vehicles on rails, ships, machines, appliances and furniture.

**22.** Use of a sealing composition such as defined in claim 21, for bonding and/or corrosion protection for aircraft, spacecraft, automotive road vehicles, vehicles on rails, ships, machines, appliances and furniture.

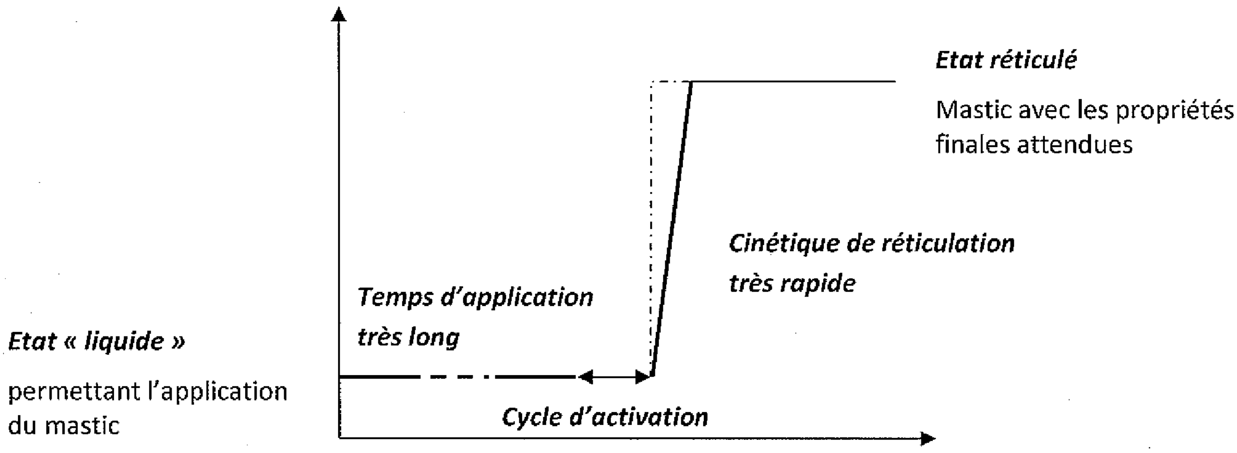


FIGURE unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0619355 A
- EP 1478703 A


### Littérature non-brevet citée dans la description


- **HEINZ LUCKE ; HÜTHIG ; WEPF.** *ALIPS - Aliphatic Polysulfides - Monograph of an elastomer,* 1994